# EUROPÄISCHE PATENTANMELDUNG

(11) **EP 4 650 537 A1**
(43) Veröffentlichungstag der Anmeldung: **19.11.2025**
(21) Anmeldenummer: 25172364.9
(22) Anmeldetag: 24.04.2025
(51) Int. Cl.: E03C 1/05

(54) **SYSTEM UND VERFAHREN ZUM STEUERN EINER SANITÄREINRICHTUNG SOWIE SANITÄREINRICHTUNG**

(30) Priorität: 16.05.2024 DE 102024204532
(71) Anmelder: BLANCO GmbH + Co KG, 75038 Oberderdingen (DE)
(72) Erfinder: Schuß, Steven, 76327 Pfinztal (DE)
(74) Vertreter: Ullrich & Naumann PartG mbB

(57) **Zusammenfassung**

Die Erfindung betrifft ein System (2) zum Steuern einer Sanitäreinrichtung (1), insbesondere einer zumindest teilweise in einem Küchenunterschrank angeordneten Sanitäreinrichtung (1), umfassend eine an einer Sanitäreinrichtung anordenbare Steuereinrichtung (3) und zumindest ein, insbesondere mobiles, Bediengerät (4) eines Benutzers, wobei die Steuereinrichtung und das zumindest eine Bediengerät ausgebildet sind, über eine, insbesondere kontinuierlich aufrechterhaltene, Drahtlosverbindung miteinander zu kommunizieren, wobei durch das zumindest eine Bediengerät zumindest ein Bedienbefehl des Benutzers an die Steuereinrichtung übermittelbar ist, wobei zumindest eine Funktion (7) der Sanitäreinrichtung durch die Steuereinrichtung basierend auf dem empfangenen, zumindest einen Bedienbefehl steuerbar ist, wobei die zumindest eine Funktion in Abhängigkeit einer Signalstärke der Drahtlosverbindung steuerbar ist, wobei die Steuereinrichtung ausgebildet ist, nach einem Überschreiten und/oder Unterschreiten eines Schwellwerts einer vorgebbaren Signalstärke einen Zustand der Sanitäreinrichtung gegenüber einem Benutzer zu signalisieren und nach Ablauf einer vorgebbaren Zeitspanne und/oder nach Bestätigung des signalisierten Zustands durch einen Nutzer, eine Steuerbarkeit der zumindest einen Funktion bereitzustellen.

## Beschreibung

Die Erfindung betrifft ein System zum Steuern einer Sanitäreinrichtung, insbesondere einer zumindest teilweise in einem Küchenunterschrank angeordneten Sanitäreinrichtung.

Die Erfindung betrifft weiter eine Sanitäreinrichtung mit einem System zum Steuern der Sanitäreinrichtung.

Zudem betrifft die Erfindung ein Verfahren zum Steuern einer Sanitäreinrichtung.

Aus der EP 3 236 709 B1 ist ein Kochgerät bekannt geworden, welches über eine Bluetooth-Verbindung mit einem Smartphone steuerbar ist. Dabei verbindet sich das Kochgerät mit dem Smartphone, sobald ein bestimmter Schwellwert der Signalstärke überschritten ist. Besteht eine Verbindung, ist die Gerätesteuerung uneingeschränkt möglich. Unterschreitet die Signalstärke einen vorgebbaren Minimalwert, werden Bedienbefehle für die Gerätesteuerung blockiert.

Dabei kann die Gerätesteuerung trotz ausreichender Signalstärke auch außer Sichtweite des Kochgerätes vorgenommen werden. Dies kann zu einer mangelnden Überwachung des Kochgeräts führen.

Eine Aufgabe der vorliegenden Erfindung ist es daher, ein System, eine Sanitäreinrichtung und ein Verfahren zum Steuern einer Sanitäreinrichtung anzugeben, welche mit konstruktiv einfachen Mitteln eine sichere und komfortable Steuerung der Sanitäreinrichtung ermöglichen.

Eine weitere Aufgabe der vorliegenden Erfindung ist es, ein alternatives System, eine alternative Sanitäreinrichtung und ein alternatives Verfahren zum Steuern einer Sanitäreinrichtung anzugeben.

In einer Ausführungsform löst die vorliegende Erfindung die vorstehend genannten Aufgaben mit einem System zum Steuern einer Sanitäreinrichtung, insbesondere einer zumindest teilweise in einem Küchenunterschrank angeordneten Sanitäreinrichtung, umfassend eine an einer Sanitäreinrichtung anordenbare Steuereinrichtung und zumindest ein, insbesondere mobiles, Bediengerät eines Benutzers, wobei die Steuereinrichtung und das zumindest eine Bediengerät ausgebildet sind, über eine, insbesondere kontinuierlich aufrechterhaltene, Drahtlosverbindung miteinander zu kommunizieren, wobei durch das zumindest eine Bediengerät zumindest ein Bedienbefehl des Benutzers an die Steuereinrichtung übermittelbar ist, wobei zumindest eine Funktion der Sanitäreinrichtung durch die Steuereinrichtung basierend auf dem empfangenen, zumindest einen Bedienbefehl steuerbar ist, wobei die zumindest eine Funktion in Abhängigkeit einer Signalstärke der Drahtlosverbindung steuerbar ist, wobei die Steuereinrichtung ausgebildet ist, nach einem Überschreiten und/oder Unterschreiten eines Schwellwerts einer vorgebbaren Signalstärke einen Zustand der Sanitäreinrichtung gegenüber einem Benutzer zu signalisieren und nach Ablauf einer vorgebbaren Zeitspanne und/oder nach Bestätigung des signalisierten Zustands durch einen Nutzer, eine Steuerbarkeit der zumindest einen Funktion bereitzustellen.

In einer Ausführungsform löst die vorliegende Erfindung die vorstehend genannten Aufgaben mit einer Sanitäreinrichtung, insbesondere eine zumindest teilweise in einem Küchenunterschrank angeordnete Sanitäreinrichtung, mit einem System gemäß einem der Ansprüche 1 bis 13.

In einer Ausführungsform löst die vorliegende Erfindung die vorstehend genannten Aufgaben mit einem Verfahren zum Steuern einer Sanitäreinrichtung, insbesondere einer zumindest teilweise in einem Küchenunterschrank angeordneten Sanitäreinrichtung, mit einem System gemäß einem der Ansprüche 1 bis 13. Das Verfahren umfasst die Schritte:
- Herstellen der Drahtlosverbindung zwischen der Steuereinrichtung und dem zumindest einen Bediengerät,
- Bestimmen der Signalstärke der Drahtlosverbindung durch die Steuereinrichtung und/oder das zumindest eine Bediengerät, und
- Signalisieren eines Zustands der Sanitäreinrichtung gegenüber einem Benutzer nach einem Überschreiten und/oder Unterschreiten eines Schwellwerts einer vorgebbaren Signalstärke, und
- Bereitstellen einer Steuerbarkeit der zumindest einen Funktion nach Ablauf einer vorgebbaren Zeitspanne und/oder nach Bestätigung des signalisierten Zustands durch einen Nutzer.

Einer der dadurch erzielten Vorteile ist, dass die Steuerung von Funktionen der Sanitäreinrichtung, wie beispielsweise die Ausgabe von heißem Wasser, nur bei bestimmten Signalstärken vorgenommen werden kann. Mit anderen Worten kann dies bedeuten, dass die Steuerbarkeit der zumindest einen Funktion bei bestimmten Signalstärken aktiviert und/oder deaktiviert ist. Die Signalstärke korreliert im Wesentlichen insbesondere mit einem Abstand des Bediengeräts zu der Steuereinrichtung. Somit kann beispielsweise sichergestellt werden, dass heißes Wasser nur ausgegeben wird, wenn sich der Benutzer in unmittelbar Nähe mit Sichtverbindung zur Sanitäreinrichtung befindet. Die Wahrscheinlichkeit wird somit verringert, dass andere Personen, insbesondere Kinder, von der Ausgabe von heißem Wasser unmittelbar betroffen sind.

Eine kontinuierlich aufrechterhaltene Drahtlosverbindung ist dahingehend vorteilhaft, dass die Signalstärke kontinuierlich bestimmt werden kann. Somit kann vermieden werden, dass eine Annäherung einer Person mit einem Bediengerät an die Sanitäreinrichtung nicht oder nicht rechtzeitig erkannt wird. Dadurch wird die Sicherheit des Systems erhöht.

Der Begriff "Signalstärke" ist im weitesten Sinne zu verstehen und bezieht sich, insbesondere in den Ansprüchen, vorzugsweise in der Beschreibung auf die Intensität, Stärke oder Amplitude eines zwischen der Steuereinrichtung und dem zumindest einen Bediengerät übermittelten Signals. Eine höhere Signalstärke kann dabei bedeuten, dass die Steuereinrichtung und das zumindest eine Bediengerät einen geringeren Abstand zueinander aufweisen und/oder dass das Signal weniger durch Hindernisse zwischen der Steuereinrichtung und dem zumindest einen Bediengerät beeinträchtigt wird.

Weitere Merkmale, Vorteile und weitere Ausführungsformen der Erfindung sind im Folgenden beschrieben oder werden dadurch offenbar.

Gemäß einer vorteilhaften Weiterbildung der Erfindung sind zumindest zwei Funktionen bereitstellbar, wobei zumindest einem Teil der Funktionen und/oder zumindest einer Funktionskategorie mit einer oder mehreren Funktionen zumindest ein definierter Schwellwert der Signalstärke zugeordnet ist, wobei die Funktionen oberhalb und/oder unterhalb des zumindest einen Schwellwerts steuerbar sind. Dadurch kann auf besonders einfache Weise sichergestellt werden, dass sich der Benutzer bei der Steuerung sicherheitskritischer Funktionen in unmittelbarer Nähe der Sanitäreinrichtung befindet. Der Schwellwert kann dabei so definiert sein, dass sich der Benutzer in einem geringen Abstand, beispielsweise von maximal 1 m, zu der Sanitäreinrichtung befindet und dass sich keine das Funksignal beeinträchtigenden Hindernisse zwischen dem Benutzer und der Sanitäreinrichtung befinden. Es ist beispielsweise denkbar, dass die Steuerung sicherheitskritischer Funktionen, wie beispielswiese die Ausgabe von heißem Wasser, oberhalb eines dieser Funktion zugeordneten Schwellwerts aktiviert und unterhalb dieses Schwellwerts deaktiviert ist. Funktionen, wie die Ausgabe von heißem Wasser, können beispielsweise oberhalb eines Schwellwerts von 60 %, vorzugsweise 80 %, mehr bevorzugt 90 %, einer maximalen Signalstärke steuerbar sein. Funktionen, die weniger oder nicht sicherheitskritisch sind, können oberhalb eines niedrigeren Schwellwerts steuerbar sein. Durch das Zuordnen mehrerer Funktionen zu einer Funktionskategorie kann der Implementierungsaufwand in Bezug auf die Steuerungssoftware reduziert werden.

Gemäß einer weiteren vorteilhaften Weiterbildung der Erfindung weist die Steuereinrichtung zumindest eine, insbesondere optische, Signalisierungseinrichtung auf, wobei die zumindest eine Signalisierungseinrichtung ausgebildet ist, einen Zustand der Sanitäreinrichtung gegenüber einem Benutzer zu signalisieren. Einer der dadurch erzielten Vorteile ist, dass der Benutzer den Zustand der Sanitäreinrichtung leicht erkennen kann und somit die Sicherheit bei der Steuerung des Systems erhöht ist. Es ist denkbar, dass die zumindest eine Signalisierungseinrichtung eine LED-Einrichtung umfasst. Die LED-Einrichtung kann beispielsweise ausgebildet sein, rot zu leuchten, wenn eine eingestellte Wassertemperatur über einem bestimmten Wert liegt.

Gemäß einer weiteren vorteilhaften Weiterbildung der Erfindung ist die zumindest eine Funktion durch eine Bestätigung des signalisierten Zustands durch den Benutzer mittels des Bediengeräts steuerbar. Durch die Möglichkeit, den signalisierten Zustand über das Bediengerät zusätzlich zu bestätigen, ist die Sicherheit bei der Steuerung des Systems weiter erhöht.

Gemäß einer weiteren vorteilhaften Weiterbildung der Erfindung ist der Zustand über eine definierte Zeitdauer, insbesondere mindestens 0,5 s und maximal 5 s, vorzugsweise 2 s, signalisierbar. Vorteil hiervon ist, dass eine ausreichend hohe Zeitdauer zum Erfassen und Erkennen des signalisierten Zustands durch den Benutzer gegeben ist und dass gleichzeitig die Benutzererfahrung nicht durch eine zu lange Signalisierung des Zustands beeinträchtigt wird.

Gemäß einer weiteren vorteilhaften Weiterbildung der Erfindung ist der Zustand nach einem Überschreiten und/oder Unterschreiten des zumindest einen Schwellwerts durch die Steuereinrichtung an das zumindest eine Bediengerät übermittelbar. Einer der dadurch erzielten Vorteile ist, dass der Benutzer den Zustand besonders einfach und schnell erfassen sowie erkennen kann.

Gemäß einer weiteren vorteilhaften Weiterbildung der Erfindung umfasst der Zustand eine aktuelle Einstellung, beispielsweise ein aktuell eingestelltes Fluidmerkmal eines durch eine Fluidausgabeeinrichtung auszugebenden Fluids und/oder eine aktuelle Position eines Fluidauslasses, und/oder einen aktuellen Status, beispielsweise einen aktuellen Füllstand eines Abfallbehälters und/oder eine aktuelle Beschaffenheit eines Wasserfilters. Durch die Signalisierung einer aktuellen Einstellung kann eine erneute Eingabe der Einstellung durch den Benutzer vermieden werden, sodass die Benutzererfahrung verbessert wird. Die Signalisierung eines aktuellen Status kann die Benutzererfahrung ebenfalls verbessern, da der aktuelle Status dem Benutzer angezeigt wird und der Benutzer diesen nicht selbst ermitteln muss. Der aktuelle Status kann als Entscheidungsgrundlage für eine nachfolgende Aktion des Nutzers dienen. Beispielsweise kann ein aktueller Status eines Abfallbehälters in Form eines maximalen Füllstands signalisiert werden. Somit kann der Benutzer auf Grundlage dieser Information entscheiden, den Abfallbehälter zu leeren.

Gemäß einer weiteren vorteilhaften Weiterbildung der Erfindung ist das zumindest eine Bediengerät durch die Steuereinrichtung identifizierbar, wobei die zumindest eine Funktion in Abhängigkeit eines Identifikationsergebnisses steuerbar ist. Somit kann die Steuerung von Funktionen für bestimmte Personen oder Personengruppen, die einem identifizierten Bediengerät zugeordnet sind, dauerhaft verhindert sein. Solche Personen oder Personengruppen können vorzugsweise Kinder umfassen. Dadurch kann die Überwachung bei der Steuerung des Systems erhöht werden. Grundsätzlich können hierbei länderspezifische Normen mit Bezug zu Datenschutzbestimmungen beachtet werden.

Gemäß einer weiteren vorteilhaften Weiterbildung der Erfindung ist nach einem Überschreiten und/oder Unterschreiten des zumindest einen Schwellwerts durch die Steuereinrichtung eine definierte Benutzerpräferenz einstellbar, insbesondere wobei zumindest zwei Funktionen bereitstellbar sind, wobei die Benutzerpräferenz dem Identifikationsergebnis und zumindest einem Teil der Funktionen und/oder zumindest einer Funktionskategorie mit einer oder mehreren Funktionen zugeordnet ist. Vorteil hiervon ist, dass eine zumindest teilweise automatisierte Steuerung der Sanitäreinrichtung ermöglicht und damit die Benutzerfreundlichkeit erhöht wird.

Gemäß einer weiteren vorteilhaften Weiterbildung der Erfindung sind zumindest zwei Bediengeräte für die Sanitäreinrichtung vorgesehen, wobei nach einem Überschreiten eines einem der Bediengeräte zugeordneten Schwellwerts der Signalstärke durch die Steuereinrichtung eine Annäherungsbenachrichtigung an ein anderes der Bediengeräte übermittelbar ist. Vorteil hiervon ist unter anderem, dass einer anderen Person eine Annäherung von bestimmten Personen oder Personengruppen, wie beispielsweise Kindern, an die Sanitäreinrichtung angezeigt wird. Dadurch wird die Sicherheit des Systems erhöht.

Gemäß einer weiteren vorteilhaften Weiterbildung der Erfindung weist das zumindest eine Bediengerät eine Anzeigeeinrichtung zum Anzeigen einer Aktivierung und/oder Deaktivierung der Steuerung auf. Somit ist für den Benutzer sofort ersichtlich, ob sich dieser bereits in einer ausreichend geringen Entfernung zu der Sanitäreinrichtung befindet und es wird eine verbesserte Benutzerfreundlichkeit des Systems bereitgestellt.

Gemäß einer weiteren vorteilhaften Weiterbildung der Erfindung umfasst die Sanitäreinrichtung zumindest eine der folgenden Einrichtungen: eine Wasserarmatur, eine Spüle, ein Abfallsystem, einen Speiseresteentsorger, eine Wasseraufbereitungseinheit, einen Luftentfeuchter. Diese Einrichtungen eignen sich besonders gut für eine Implementierung des Systems, da diese Funktionen, wie beispielsweise die Ausgabe von heißem Wasser oder die Nutzung eines Zerkleinerers eines Speiseresteentsorgers, umfassen. Darüber hinaus kann für einen Nutzer eine hohe Flexibilität bei der Auswahl der Einrichtungen bereitgestellt werden, die mittels eines Bediengeräts steuerbar sind.

Gemäß einer weiteren vorteilhaften Weiterbildung der Erfindung basiert die Drahtlosverbindung auf dem Datenübertragungsstandard Bluetooth, Bluetooth-Low-Energy, WLAN, WiFi, Zigbee, NFC, Sigfox, Li-Fi oder Mioty. Je nach Bedarf und Randbedingungen können diese verwendet werden, beispielsweise wenn ein geringer Stromverbrauch, eine hohe Verfügbarkeit, eine hohe Datenrate, eine hohe Reichweite und dergleichen gewünscht wird.

Gemäß einer weiteren vorteilhaften Weiterbildung der Erfindung umfasst das zumindest eine Bediengerät ein Mobiltelefon und/oder eine Smartwatch. Solche mobilen Bediengeräte werden von dem Benutzer oder anderen Personen meist direkt am Körper getragen, sodass der Abstand des Bediengeräts zu der Sanitäreinrichtung mit dem Abstand des Benutzers oder anderer Personen zu der Sanitäreinrichtung korrespondiert. Es ist denkbar, dass die Sanitäreinrichtung über eine App steuerbar ist, die auf dem Mobiltelefon und/oder der Smartwatch installiert ist.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen
- Fig. 1: in schematischer Darstellung eine Sanitäreinrichtung gemäß einer Ausführungsform der vorliegenden Erfindung in einer räumlichen Ansicht, und
- Fig. 2: Schritte eines Verfahrens gemäß einer Ausführungsform der vorliegenden Erfindung.

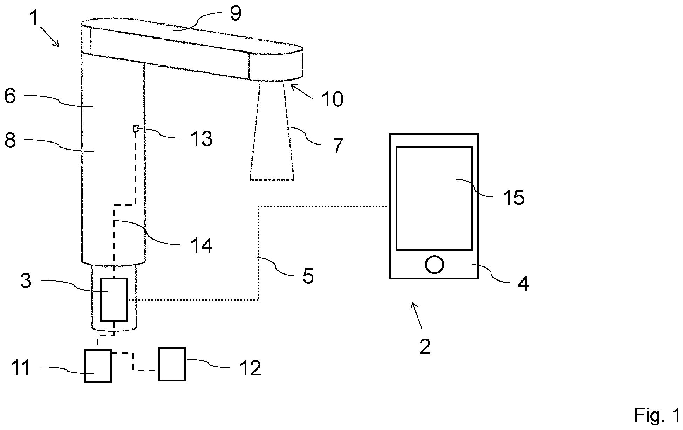

Die Figur 1 zeigt in schematischer Darstellung eine Sanitäreinrichtung gemäß einer Ausführungsform der vorliegenden Erfindung in einer räumlichen Ansicht.

In Figur 1 ist eine Sanitäreinrichtung 1 mit einem System 2 zum Steuern der Sanitäreinrichtung 1, umfassend eine an der Sanitäreinrichtung 1 angeordnete Steuereinrichtung 3 und ein mobiles Bediengerät 4 in Form eines Mobiltelefons eines Benutzers, dargestellt. Dabei sind die Steuereinrichtung 3 und das Mobiltelefon 4 ausgebildet, über eine kontinuierlich aufrechterhaltene Drahtlosverbindung 5 miteinander zu kommunizieren. Die Drahtlosverbindung 5 basiert auf dem Datenübertragungsstandard Bluetooth. Die Sanitäreinrichtung 1 umfasst hier eine Wasserarmatur 6 zum Ausgeben von Wasser.

Durch das Mobiltelefon 4 ist zumindest ein Bedienbefehl des Benutzers an die Steuereinrichtung 3 übermittelbar, wobei mehrere Funktionen 7 der Sanitäreinrichtung 1 durch die Steuereinrichtung 3 basierend auf dem empfangenen, zumindest einen Bedienbefehl steuerbar sind. Dabei sind die Funktionen 7 in Abhängigkeit einer Signalstärke der Drahtlosverbindung 5 steuerbar.

Die Wasserarmatur 6 weist einen sich in vertikaler Richtung erstreckenden Grundkörper 8 und einen sich in horizontaler Richtung erstreckenden Auslaufkörper 9 auf. Der Auslaufkörper 9 umfasst eine Wasserauslassöffnung 10. Die Wasserarmatur 6 weist des Weiteren eine elektronische Kartusche 11 sowie eine Wasseraufbereitungseinheit 12 auf und ist ausgebildet, Leitungswasser, gefiltertes Wasser und karbonisiertes Wasser und Heißwasser auszugeben.

Die Wasserarmatur 6 umfasst zudem eine Signalisierungseinrichtung 13 in Form einer LED-Einrichtung, die in dem Grundkörper 8 angeordnet ist. Die LED-Einrichtung 13 kann ausgebildet sein, rot zu leuchten, wenn eine eingestellte Wassertemperatur über einem bestimmten Wert liegt.

Die Steuereinrichtung 3 ist in Figur 1 schematisch dargestellt und zum Kommunizieren mit der elektronischen Kartusche 11, der Wasseraufbereitungseinheit 12 und der LED-Einrichtung 13 über elektrische Leitungen 14 verbunden. Dabei kann die Steuereinrichtung 3 in und/oder an der Wasserarmatur 6 angeordnet sein oder als separates Bauteil vorgesehen sein.

Die steuerbaren Funktionen 7 der Wasserarmatur 6 umfassen die Ausgabe von Leitungswasser, gefiltertem Wasser und karbonisiertem Wasser oder Heißwasser. Zumindest einem Teil der Funktionen 7 ist jeweils ein definierter Schwellwert der Signalstärke zugeordnet, wobei die Funktionen 7 oberhalb des jeweiligen Schwellwerts steuerbar sind. Dies kann bedeuten, dass die Steuerbarkeit dieser Funktionen 7 oberhalb des Schwellwerts aktiviert und unterhalb des Schwellwerts deaktiviert ist.

Beispielsweise ist der Ausgabe von heißem Wasser ein besonders hoher Schwellwert, insbesondere 90 % einer maximalen Signalstärke, zugeordnet, um sicherzustellen, dass sich der Benutzer bei der Ausgabe in unmittelbarer Nähe zu der Wasserarmatur 6 befindet. Unterhalb dieses Schwellwerts ist die Ausgabe von heißem Wasser durch die Steuereinrichtung 3 deaktiviert, die anderen Funktionen sind jedoch in Abhängigkeit der Signalstärke gegebenenfalls noch steuerbar.

Das Mobiltelefon 4 weist eine Anzeigeeinrichtung 15 in Form eines Bildschirms zum Anzeigen einer Aktivierung und/oder Deaktivierung der Steuerung auf.

Darüber hinaus kann auch eine Zeitdauer vorgegeben werden, in der ein Absinken der Signalstärke unter den Schwellwert ohne Verlust der Steuerbarkeit einhergeht. So kann dem Umstand Rechnung getragen werden, dass ein Nutzer sich nur kurzzeitig von der Sanitäreinrichtung 1 entfernt.

Es ist ebenfalls denkbar, dass an der Sanitäreinrichtung 1 direkt vorgenommene Einstellungen oder Bedienbefehle, Befehle über die Drahtlosverbindung 5 übersteuern beziehungsweise außer Kraft setzen.

Weiterhin ist es denkbar, dass bei Annäherung des Mobiltelefons 4 bzw. einer Smartwatch eines jeweiligen Nutzers an die Sanitäreinrichtung 1 nutzerdefinierte Einstellungen für die Sanitäreinrichtung gemäß einem entsprechend hinterlegten Nutzerprofil vorgenommen werden.

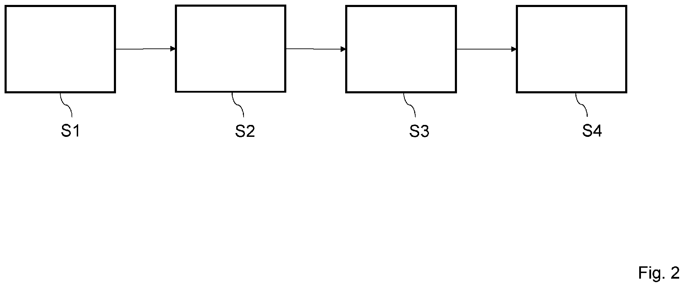

Die Figur 2 zeigt Schritte eines Verfahrens gemäß einer Ausführungsform der vorliegenden Erfindung.

Das Verfahren zum Steuern einer Sanitäreinrichtung 1 kann insbesondere unter Verwendung eines Systems 2 gemäß Figur 1 durchgeführt werden.

In einem ersten Schritt S1 wird die Drahtlosverbindung 5 zwischen der Steuereinrichtung 3 und einem mobilen Bediengerät 4 in Form eines Mobiltelefons hergestellt. Dies kann vollständig automatisiert oder unterstützend durch den Benutzer des Mobiltelefons 4 erfolgen, wobei der Benutzer die Drahtlosverbindung 5 über eine auf dem Mobiltelefon 4 installierte App einrichtet.

Sobald die Drahtlosverbindung 5 hergestellt ist, wird die Signalstärke der Drahtlosverbindung 5 in einem zweiten Schritt S2 bestimmt. Dies kann durch die Steuereinrichtung 3 und/oder durch das Mobiltelefon 4 erfolgen.

Anschließend erfolgt in einem dritten Schritt S3 ein Signalisieren eines Zustands der Sanitäreinrichtung 1 gegenüber einem Benutzer nach einem Überschreiten und/oder Unterschreiten eines Schwellwerts einer vorgebbaren Signalstärke. In Abhängigkeit einer ansteigenden oder abfallenden Signalstärke der Drahtlosverbindung 5 wird damit einem Benutzer der Zustand der Sanitäreinrichtung 1 angezeigt.

In einem vierten Schritt S4 erfolgt dann ein Bereitstellen einer Steuerbarkeit der zumindest einen Funktion 7 nach Ablauf einer vorgebbaren Zeitspanne und/oder nach Bestätigung des signalisierten Zustands durch einen Nutzer. Mit anderen Worten soll der Nutzer zuerst den aktuellen Zustand der Sanitäreinrichtung 1 zur Kenntnis nehmen, bevor diese durch den Nutzer gesteuert werden kann.

In Abhängigkeit der Signalstärke der Drahtlosverbindung 5, insbesondere oberhalb eines definierten Schwellwerts der Signalstärke der Drahtlosverbindung 5, kann anschließend zumindest eine Funktion 7 der Sanitäreinrichtung 1 gesteuert werden.

Zusammenfassend kann zumindest eine Ausführungsform der vorliegenden Erfindung zumindest eines der folgenden Merkmale aufweisen und/oder kann zumindest einen der folgenden Vorteile bereitstellen:
- Erhöhte Sicherheit.
- Erhöhte Benutzerfreundlichkeit.
- Reduzierter Implementierungsaufwands.
- Verbesserte Benutzererfahrung.
- Automatisierte Steuerung.
- Geringer Stromverbrauch.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Sanitäreinrichtung
- 2: System
- 3: Steuereinrichtung
- 4: Bediengerät, Mobiltelefon
- 5: Drahtlosverbindung
- 6: Wasserarmatur
- 7: Funktion
- 8: Grundkörper
- 9: Auslaufkörper
- 10: Wasserauslassöffnung
- 11: Elektronische Kartusche
- 12 13: Wasseraufbereitungseinheit Signalisierungseinrichtung, LED-Einrichtung
- 14: Elektrische Leitung
- 15: Anzeigeeinrichtung

- S1-S4: Schritte des Verfahrens

## Patentansprüche

1. System (2) zum Steuern einer Sanitäreinrichtung (1), insbesondere einer zumindest teilweise in einem Küchenunterschrank angeordneten Sanitäreinrichtung (1), umfassend eine an einer Sanitäreinrichtung (1) anordenbare Steuereinrichtung (3) und zumindest ein, insbesondere mobiles, Bediengerät (4) eines Benutzers,
wobei die Steuereinrichtung (3) und das zumindest eine Bediengerät (4) ausgebildet sind, über eine, insbesondere kontinuierlich aufrechterhaltene, Drahtlosverbindung (5) miteinander zu kommunizieren,
wobei durch das zumindest eine Bediengerät (4) zumindest ein Bedienbefehl des Benutzers an die Steuereinrichtung (3) übermittelbar ist,
wobei zumindest eine Funktion (7) der Sanitäreinrichtung (1) durch die Steuereinrichtung (3) basierend auf dem empfangenen, zumindest einen Bedienbefehl steuerbar ist,
wobei die zumindest eine Funktion (7) in Abhängigkeit einer Signalstärke der Drahtlosverbindung (5) steuerbar ist,
wobei die Steuereinrichtung (3) ausgebildet ist, nach einem Überschreiten und/oder Unterschreiten eines Schwellwerts einer vorgebbaren Signalstärke einen Zustand der Sanitäreinrichtung (1) gegenüber einem Benutzer zu signalisieren und nach Ablauf einer vorgebbaren Zeitspanne und/oder nach Bestätigung des signalisierten Zustands durch einen Nutzer, eine Steuerbarkeit der zumindest einen Funktion (7) bereitzustellen.

2. System (2) nach Anspruch 1, **dadurch gekennzeichnet, dass** zumindest zwei Funktionen (7) bereitstellbar sind, wobei zumindest einem Teil der Funktionen (7) und/oder zumindest einer Funktionskategorie mit einer oder mehreren Funktionen (7) zumindest ein definierter Schwellwert der Signalstärke zugeordnet ist, wobei die Funktionen (7) oberhalb und/oder unterhalb des zumindest einen Schwellwerts steuerbar sind.

3. System (2) nach Anspruch 1 oder 2, **dadurch gekennzeichnet, dass** die Steuereinrichtung (3) zumindest eine, insbesondere optische, Signalisierungseinrichtung (13) aufweist, wobei die zumindest eine Signalisierungseinrichtung (13) ausgebildet ist, einen Zustand der Sanitäreinrichtung (1) gegenüber einem Benutzer zu signalisieren.

4. System (2) nach einem der Ansprüche 1 bis 3, **dadurch gekennzeichnet, dass** die zumindest eine Funktion (7) durch eine Bestätigung des signalisierten Zustands durch den Benutzer mittels des Bediengeräts (4) steuerbar ist.

5. System (2) nach einem der Ansprüche 1 bis 4, **dadurch gekennzeichnet, dass** der Zustand über eine definierte Zeitdauer, insbesondere mindestens 0,5 s und maximal 5 s, vorzugsweise 2 s, signalisierbar ist.

6. System (2) nach einem der Ansprüche 1 bis 5, **dadurch gekennzeichnet, dass** der Zustand nach einem Überschreiten und/oder Unterschreiten des zumindest einen Schwellwerts durch die Steuereinrichtung (3) an das zumindest eine Bediengerät (4) übermittelbar ist.

7. System (2) nach einem der Ansprüche 1 bis 6, **dadurch gekennzeichnet, dass** der Zustand eine aktuelle Einstellung, beispielsweise ein aktuell eingestelltes Fluidmerkmal eines durch eine Fluidausgabeeinrichtung auszugebenden Fluids und/oder eine aktuelle Position eines Fluidauslasses, und/oder einen aktuellen Status, beispielsweise einen aktuellen Füllstand eines Abfallbehälters und/oder eine aktuelle Beschaffenheit eines Wasserfilters, umfasst.

8. System (2) nach einem der Ansprüche 1 bis 7, **dadurch gekennzeichnet, dass** das zumindest eine Bediengerät (4) durch die Steuereinrichtung (3) identifizierbar ist, wobei die zumindest eine Funktion (7) in Abhängigkeit eines Identifikationsergebnisses steuerbar ist.

9. System (2) nach einem der Ansprüche 1-8, **dadurch gekennzeichnet, dass** nach einem Überschreiten und/oder Unterschreiten des zumindest einen Schwellwerts durch die Steuereinrichtung (3) eine definierte Benutzerpräferenz einstellbar ist, insbesondere wobei zumindest zwei Funktionen (7) bereitstellbar sind, wobei die Benutzerpräferenz dem Identifikationsergebnis und zumindest einem Teil der Funktionen (7) und/oder zumindest einer Funktionskategorie mit einer oder mehreren Funktionen (7) zugeordnet ist.

10. System (2) nach einem der Ansprüche 1 bis 9, **dadurch gekennzeichnet, dass** zumindest zwei Bediengeräte (4) für die Sanitäreinrichtung (1) vorgesehen sind, wobei nach einem Überschreiten eines einem der Bediengeräte (4) zugeordneten Schwellwerts der Signalstärke durch die Steuereinrichtung (3) eine Annäherungsbenachrichtigung an ein anderes der Bediengeräte (4) übermittelbar ist.

11. System (2) nach einem der Ansprüche 1 bis 10, **dadurch gekennzeichnet, dass** das zumindest eine Bediengerät (4) eine Anzeigeeinrichtung (15) zum Anzeigen einer Aktivierung und/oder Deaktivierung der Steuerung aufweist.

12. System (2) nach einem der Ansprüche 1 bis 11, **dadurch gekennzeichnet, dass** die Sanitäreinrichtung (1) zumindest eine der folgenden Einrichtungen umfasst: eine Wasserarmatur (6), eine Spüle, ein Abfallsystem, einen Speiseresteentsorger, eine Wasseraufbereitungseinheit (12), einen Luftentfeuchter und/oder dass die Drahtlosverbindung (5) auf dem Datenübertragungsstandard Bluetooth, Bluetooth-Low-Energy, WLAN, WiFi, Zigbee, NFC, Sigfox, Li-Fi oder Mioty basiert.

13. System (2) nach einem der Ansprüche 1 bis 12, **dadurch gekennzeichnet, dass** das zumindest eine Bediengerät (4) ein Mobiltelefon (4) und/oder eine Smartwatch umfasst.

14. Sanitäreinrichtung (1), insbesondere eine zumindest teilweise in einem Küchenunterschrank angeordnete Sanitäreinrichtung (1), mit einem System (2) gemäß einem der Ansprüche 1 bis 13.

15. Verfahren zum Steuern einer Sanitäreinrichtung (1), insbesondere einer zumindest teilweise in einem Küchenunterschrank angeordneten Sanitäreinrichtung (1), mit einem System (2) gemäß einem der Ansprüche 1 bis 13, umfassend die Schritte:
- Herstellen (S1) der Drahtlosverbindung (5) zwischen der Steuereinrichtung (3) und dem zumindest einen Bediengerät (4),
- Bestimmen (S2) der Signalstärke der Drahtlosverbindung (5) durch die Steuereinrichtung (3) und/oder das zumindest eine Bediengerät (4),
- Signalisieren (S3) eines Zustands der Sanitäreinrichtung (1) gegenüber einem Benutzer nach einem Überschreiten und/oder Unterschreiten eines Schwellwerts einer vorgebbaren Signalstärke, und
- Bereitstellen (S4) einer Steuerbarkeit der zumindest einen Funktion nach Ablauf einer vorgebbaren Zeitspanne und/oder nach Bestätigung des signalisierten Zustands durch einen Nutzer.
